# EUROPEAN PATENT APPLICATION

(11) **EP 4 789 744 A1**
(43) Date of publication of application: **12.08.2026**
(21) Application number: 25156133.8
(22) Date of filing: 06.02.2025
(51) Int. Cl.: B01D 15/34, C08F 210/16, G01N 30/88

(54) **METHODS AND SYSTEMS FOR MONITORING AND DIGITALLY REPRODUCING A POLYMERIZATION PROCESS**

(71) Applicant: Borealis GmbH, 1020 Vienna (AT)
(72) Inventor: ALBRECHT, Andreas, 4021 Linz (AT); JEREMIC, Ljiljana, 4021 Linz (AT); FUCHS, Gudrun, 4021 Linz (AT); TOULOUPIDIS, Vasileios, 4021 Linz (AT); JARL, Anna-Karin, 444 86 Stenungsund (SE); KAUFMANN, Christoph, 84489 Burghausen (DE); CARLSSON, Niclas, 44486 Stenungsund (SE); SKALEN, Staffan, 44486 Stenungsund (SE)
(74) Representative: Ter Meer Steinmeister & Partner

(57) **Abstract**

The present invention relates to a method for monitoring a polymerization process in near real time by use of a fast GPC analysis method. Furthermore, a computer-implemented method for digitally reproducing and optionally controlling a polymerization process is provided. Additionally, the present invention is directed to an apparatus for digital reproduction and optional control of a polymerization process, a system comprising the apparatus and further comprising at least one polymer production facility and the use of a computational model and fast gel permeation chromatography (GPC) for digitally reproducing and optionally controlling a continuous polymerization process.

## Description

### Field of the Invention

The present invention relates to a method for monitoring a polymerization process in near real time by use of a fast GPC analysis method. Furthermore, a computer-implemented method for digitally reproducing and optionally controlling a polymerization process is provided. Additionally, the present invention is directed to an apparatus for digital reproduction and optional control of a polymerization process, a system comprising the apparatus and further comprising at least one polymer production facility and the use of a computational model and fast gel permeation chromatography (GPC) for digitally reproducing and optionally controlling a continuous polymerization process.

### Technical Background

In order to monitor and control properties of a polymer during its production process, samples need to be collected and characterized at regular intervals. In order to provide a reasonable degree of monitoring and control, a suitable polymer property needs to be measured on the sample, conclusions need to be drawn and the necessary production process adjustments need to be communicated at a high frequency (at least once every 4-6 hours). This heavily limits the choice of characterization method: Only methods that can provide results within the timeframe of 4-6 hours can be taken into account. In this consideration, the time for the provision of results refers to the total measurement time, which includes sample acquisition, sample preparation, measurement preparation and actual measurement. Apart from the time constraints, additional limitations arise due to the level of technical expertise that is needed to carry out the measurement method and due resources that have to be provided.

Ideally, the polymer property that is used for monitoring and control is a molecular weight property. Molecular weight properties form the basis for all secondary rheological and mechanical properties. Furthermore, there is a long-established method for measuring molecular weight properties, namely the gel permeation chromatography (GPC). In practice however, the measurement time needed for conventional GPC measurements is too long to be used for monitoring and controlling properties of a polymer during production. In particular, the measurement time that is needed for conventional GPC exceeds the above defined control feedback timeframe.

As an alternative to a conventional GPC, the melt flow index (MFI) could be used as a polymer property for monitoring and control. The MFI can be measured by capillary rheometry and refers to the polymer mass (in grams), flowing through a capillary under specified geometry, temperature, and load conditions during a time of 10 minutes. MFI is a polymer property which has gained great popularity in the field, offering a fast, easy to perform, and low cost polymer product characterization connected to process performance. The total melt index measurement time is within a range of 30 minutes. However, MFI method has the following limitations: Firstly, the MFI value reflects the viscosity (flowability) only at one defined shear rate that does not allow conclusions on flow properties at lower or higher shear rates. Secondly, the shear rate that the MFI refers to by default varies depending on the material as such and only the apparent shear rate is available from the method.

Thus, the known polymer properties and measurement methods have proven to be unsuitable and there remains a need for advanced characterization methods to be used in polymerization plant quality monitoring and control.

Apart from the considerations concerning suitable polymer properties and measurement methods for monitoring and control it has been suggested to use computer-implemented methods applying mathematical models for making predictions with respect to polymerization processes.

The mathematical models used in such methods make use of a kinetic scheme for the polymerization. Further aspects, such as thermodynamic equations and mass/heat transfers due to reactor geometry may also be part of the mathematical model. All these aspects constitute for a polymer reaction engineering model. Examples for polymer reaction engineering models are described in the following documents:
The article by Touloupidis V., published 2014, titled "Catalytic Olefin Polymerization Process Modeling: Multi-Scale Approach and Modeling Guidelines for Micro-Scale/Kinetic Modeling", published in Macromol. React. Eng., 8, pp. 508-527, describes multi-scale polymerization process modeling framework, comprising of polymerization kinetics (micro-scale), system thermodynamics (meso-scale), and reactor performance (macro-scale) and presents a concept for developing a mathematical model for catalytic olefin polymerization.

The article by Soares J., Touloupidis V., published 2019, titled "Polymerization Kinetics and the Effect of Reactor Residence Time on Polymer Microstructure", published in "Jeremic D., Prades F. and Albunia A. ed. Multimodal Polymers with Supported Catalysts: Design and Production", Springer International Publishing, describes the polymerization kinetics and the effect of reactor residence time on polymer microstructure.

The article by Touloupidis V., Rittenschober G., Paulik C., published 2020, titled "An Integrated PRE Methodology for Capturing the Reaction Performance of Single- and Multi-site Type Catalysts Using Bench-Scale Polymerization Experiments", Macromol. React. Eng., describes systems and methods for capturing the reaction performance of single- and multi-site type catalysts.

The model is able to predict polymerization rate and polymer product molecular properties (molecular weight distribution, comonomer content distribution and average comonomer content) based on first principles (e.g., mass balance equations) as well as a number of secondary polymer properties, including polymer density and melt index, based on and a series of correlations.

However, none of the aforementioned models is coupled to a polymerization process or receives process feedback in regular time intervals. Thus, these models are only able to make predictions based on initial set of assumptions while a continued validity of the predictions cannot be ensured.

Therefore, also the computer-implemented methods applying mathematical models still need to be improved for controlling polymerization processes.

### Summary of the Invention

The above identified needs are satisfied by the method for monitoring a polymerization process according to independent claim 1, the computer-implemented method for digitally reproducing and optionally controlling a polymerization process according to independent claim 2, and the apparatus for digital reproduction and optional control of a polymerization process according to independent claim 12 as well as the system comprising the apparatus and further comprising at least one polymer production facility according to claim 13 and the use of a computational model and fast gel permeation chromatography (GPC) for digitally reproducing and optionally controlling a continuous polymerization process according to claim 14. Advantageous embodiments may be derived from the dependent claims.

### Detailed Description of the Embodiments

The method for monitoring a polymerization process according to the present invention comprises the following steps: a) continuously polymerizing at least one alpha olefin in one or more reactors; b) extracting a sample after polymerizing in at least one of the one or more reactors; c) analyzing the sample by fast gel permeation chromatography (GPC) to obtain a measurement result for at least one polymer property, wherein the sample is dissolved and passed through two chromatography columns in series at a flow rate of 1.25 mL/min or more; and d) comparing the measurement result for at least one polymer property to at least one predetermined target value or to a previously obtained measurement result for the at least one polymer property.

The term "GPC" refers to a liquid chromatographic technique in which separation of a sample is realized based on the hydrodynamic volume of the molecules contained therein, which are eluting at different times after passing through a chromatography column. Details of conventional GPC are described in ISO 16014-1:2019. The column is usually packed with a gel-based porous non-adsorbing material having pore dimensions that are similar in size to the molecules being separated. More specifically, GPC analysis proceeds as follows: a dissolved polymer sample that is to be analyzed is injected into a mobile phase which enters a chromatography column, that is packed with non-adsorbing material made up of small particles having pores of similar or varying size. As the sample passes through the chromatography column, the molecules are separated from each other according to the difference in their molecular sizes (i.e. hydrodynamic volume). In GPC, the larger-size molecules cannot permeate into the pores, and thus elute faster, while smaller molecules can permeate into the pores and elute more slowly. Thus, different molecules are found to have different retention times. The retention time is a measure of the time taken for a molecule to pass through a chromatography column and refers to the time from injection to detection. The polymer concentration in the eluate is continuously monitored by a concentration-sensitive detector, such as an IR detector. The results are collected and plotted in a GPC-chromatogram.

As can be deduced from the summary of the operation principle above, GPC is a relative method and requires calibration. A suitable calibration is achieved by applying a so-called universal calibration method. The universal calibration method is known in the context of polymer samples and is based on the assumption that the measured retention time in GPC depends on the size of a polymer (i.e. its hydrodynamic volume) or on the product of its intrinsic viscosity (η) and molecular weight (M). Many polymers classified as random-coil polymers (regardless of their chemical structure, degree of branching, composition or tacticity) have been experimentally confirmed to fulfil this assumption. The universal calibration curve can accordingly be obtained by plotting the logarithm of η M versus the elution time (t) or elution volume (V) using polymer standards with a narrow molecular weight distribution (e.g. with a polydispersity of 1.5 or less), such as polystyrene standards with narrow molecular weight distributions. Preferably the polystyrene standards that are used for calibration have molecular weights that are distributed in the range from 400 to 12,000,000 g/mol.

After having duly performed calibration, the molecular weight Mₓ of an unknown sample can be calculated from the value of η_{standard}M_{standard} at each retention time tₓ using the universal calibration curve. If the calculation is done by means of the Mark-Houwink-Sakurada equation, it further involves ηₓ or the Mark-Houwink-Sakurada constants Kₓ and αₓ.

In the present method for monitoring a polymerization process, the sample is analyzed by fast GPC, a GPC-method which is characterized in that the sample is dissolved and passed through only two chromatography columns in series and at a high flow rate of 1.25 mL/min or more. Thus, compared to methods employing conventional GPC, which uses at least three chromatography columns in series and lower flow rates, the analysis in the method according to the present invention has the advantage of being much faster. It has further been found that neither the increase in the flow rate nor the reduction of the number of chromatography columns unduly compromises the accuracy of the analysis results. That the new method allows a significant reduction of the measurement time can also be readily understood based on the following comparison: The measurement time (including the sample dissolution time) using the conventional GPC method, varies from 220 min to 250 min, depending on the sample characteristics. By use of the fast-GPC method the measurement time is in a range of 50 min to 100 min, more preferably in a range from 55 min to 70 min. This means a speed-up by a factor of about 3.

The benefits of the present invention can be further enhanced by implementing one of the following features:

In a preferred embodiment, the method according to the present invention comprises dissolving the sample and passing the dissolved sample through two chromatography columns in series at an even higher flow rate, i.e. a flow rate of from 1.30 to 3.00 mL/min, preferably at a flow rate of from 1.35 to 2.00 mL/min, in particular at a flow rate of from 1.40 to 1.80 mL/min. This flow rate is significantly higher than conventionally applied GPC analysis flow rates and contributes to an accelerated analysis. Analysis results are thus available rapidly and for monitoring the polymerization process in real-time or nearly in real-time. At the same time, the increase in the flow rate also results in higher concentrations of molecules at the detector stage of the GPC. Hence, the signal-to-noise ratio is improved with the effect that also species that are not highly represented in the sample can be detected more easily. In combination with the use of only two instead of three chromatography columns this shortens the time that is required for the analysis.

It is also beneficial when the fast GPC that is used in the method according to the present invention is configured as a fast high temperature gel permeation chromatography (fast HT-GPC). High temperatures promote quick and complete dissolution.

It is preferred that the sample is dissolved at a temperature in a range from 150 to 190 °C, such as from 160 °C or more to 180 °C. For dissolution, the sample can be weighed into a vial or other container. Dissolution preferably takes place for a duration of 30 to 90 minutes, preferably for a duration of 40 to 70 minutes, in particular for a duration of 45 to 60 minutes. Still higher temperatures are avoided in order to minimize thermal degradation of the sample. Furthermore, still longer dissolution times are not only inacceptable since they promote thermal degradation but also since they would add to the overall analysis time. Repeated agitation or slow rotational movements of the vial inside an oven or heating block is recommended to aid dissolution of the sample. The target concentration of the sample after dissolution may be from 0.1 to 2.0 mg/mL, preferably from 0.2 to 1.8 mg/mL, for example about 1 mg/mL. In one embodiment, the sample is dissolved in a chlorinated solvent, such as trichlorobenzene or dichlorobenzene, more preferably under inert conditions, for example under nitrogen atmosphere. An antioxidant may be added during dissolution or to the dissolved sample. The antioxidant may be 2,6-tert-butyl-4-methylphenol (BHT). A suitable concentration of the antioxidant is 250 ppm (250 mg/L of solvent).

The polymerization process, that is monitored by the above method, preferably is a process wherein at least one alpha olefin selected from the group consisting of C₂-C₈ alpha olefins and mixtures thereof, more preferably from the group consisting of C₂-C₄ alpha olefins and mixtures thereof, most preferably from the group consisting of ethylene and propylene and mixtures thereof, is continuously polymerized. Accordingly, the sample is preferably a wax or a polymer sample, depending on the stage where it is extracted.

The one or more reactors in which the continuous polymerization is carried out may be selected from the group consisting of a pre-polymerization loop reactor, a polymerization loop reactor, a gas-phase reactor and combinations thereof. Moreover, it is preferred when the reactors and conditions of the polymerization process are adapted to yield a linear or short-chain branched polymer, i.e. a linear or short-chain branched polyolefin. The reason for this is that determination of molecular weight averages and molecular weight distribution of polyolefins containing long chain branching is not as accurate with the envisaged HT-GPC as described above as for linear or short-chain branched polyolefins.

Furthermore, the at least one polymer property is preferably a polymer property linked to the molecular weight of the polymer or the microstructure of the polymer. For example, the at least one polymer property may be selected from the group consisting of molecular weight, in particular molecular weight distribution (MWD), polydispersity (PD), number average molecular weight (Mn), weight average molecular weight (Mw), z-average molecular weight (Mz), and degree of short-chain branching (SCB), in particular degree of short-chain branching as a function of molecular weight. A measurement result for the degree of short-chain branching as a function of molecular weight can be obtained by use of an IR detector in the fast GPC, which is not only concentration-sensitive but also composition-sensitive. For example, such an IR detector may work with at least three optical band filters in the wavenumber region between 2800 and 3000 cm⁻¹. In this wavenumber region different absorption bands may be observed due to the C-H stretching from the polymer backbone (CH₂) and the comonomer side chains or endgroups, respectively (CH₃ and CH). Therefore, signals from such a detector may be assigned to different vibrations. For example, for all C-H stretching bands a broad spectral region between 2800 and 3000 cm⁻¹ can be designated. In this way, a first band pass filter can be used concentration-sensitive, *i.e.* for the determination of a polymer concentration. On the other hand, for the CH₃, a band filter centered at 2959 cm⁻¹ and, for the CH₂, a band filter centered at 2928 cm⁻¹ can be applied. To determine the degree of short-chain branching, the ratio of the CH₃/CH₂ signals is being used to correlate the spectrometric information from the IR detector to a corresponding CH₃/1000C content. A fourth band filter may be used as reference band filter to reduce environmental variation on the signals.

The present invention further provides a computer-implemented method for digitally reproducing and optionally controlling a polymerization process comprising the following steps: a) continuously polymerizing at least one alpha olefin in one or more reactors, wherein each reactor of the one or more reactors operates at an initial value for one or more process parameters of a plurality of process parameters; b) extracting a sample after polymerizing in at least one of the one or more reactors; c) analyzing the sample by fast gel permeation chromatography (GPC) to obtain a measurement result for at least one polymer property; d) comparing the measurement result for the at least one polymer property to a result for the at least one polymer property obtained by a computational model based on the initial value for the one or more process parameters of the plurality of process parameters; and, e) if the comparison results in a deviation, adapting one or more kinetic or thermodynamic parameters of the computational model, and f) optionally determining a subsequent value for the one or more process parameters of the plurality of process parameters based on the adapted computational model and adopting the subsequent value as the initial value in step a).

The optional step f) is an optional controlling step and preferably involves determining a subsequent value for the one or more process parameters of the plurality of process parameters based on a comparison of the measurement result for the at least one polymer property with the result for the at least one polymer property obtained by the adapted computational model and, additionally, based on a comparison of the measurement result for the at least one polymer property with a desired and/or pre-determined setpoint of the at least one polymer property.

In other words, the present invention further provides a computer-implemented method for digitally reproducing and optionally controlling a polymerization process comprising the following steps: a) continuously polymerizing at least one alpha olefin in one or more reactors, wherein each reactor of the one or more reactors operates at an initial value for one or more process parameters of a plurality of process parameters; b) extracting a sample after polymerizing in at least one of the one or more reactors; c) analyzing the sample by fast gel permeation chromatography (GPC) to obtain a measurement result for at least one polymer property; d) comparing the measurement result for the at least one polymer property to a result for the at least one polymer property obtained by a computational model with the initial value for the one or more process parameters of the plurality of process parameters as an input; and, e) if the comparison results in a deviation, adapting the computational model by adapting one or more kinetic or thermodynamic parameters, and f) optionally controlling the polymerization process by determining a subsequent value for the one or more process parameters of the plurality of process parameters based on the adapted computational model and adopting the subsequent value as the initial value in step a). With respect to the optional step f), it is to be understood that once a subsequent value for the one or more process parameters of the plurality of process parameters is determined based on the adapted computational model and the subsequent value is adopted as the initial value in step a), also the initial value for the one or more process parameters of the plurality of process parameters, which is used as an input for the computational model in step d) is refreshed, *i.e.* updated to assume the subsequent value. Furthermore, the optional control of the polymerization process may be done in a polymer property oriented way. That is, the subsequent value for the one or more process parameters of the plurality of process parameters may be determined in view of a target polymer property and with the knowledge gained from the adapted computational model.

In one embodiment, steps b)-e) of the computer-implemented method and, optionally, step f) are repeated in intervals from 3 to 10 hours, preferably in intervals from 4 to 6 hours.

In a preferred embodiment of the method steps b)-e) and, optionally, step f), are repeated more than 5 times, preferably more than 10 times, in particular more than 20 times. It is believed that the higher the total number of repetitions of these steps, the less likely it becomes that the comparison in step d) results in a deviation and that the one or more kinetic or thermodynamic parameters of the computational model need to be adapted in step e). In other words, the higher the number of repetitions of steps b)-e), the smaller may be the deviation that is found upon the comparison in step d). Without wishing to be bound by theory, it is assumed that an increasing number of repetitions of steps b)-e) may render the computational model more robust. That is, the result for the at least one polymer property obtained by the computational model may become more accurate and the one or more kinetic or thermodynamic parameters more valid descriptors of the polymerization process. At the same time, the suitability of the computer-implemented method for controlling the polymerization process by the optional step f) is enhanced with an increasing number of repetitions of steps b)-e).

In a preferred embodiment, the one or more process parameters are selected from concentration of a monomer and/or co-monomer; hydrogen ratio; temperature; pressure; concentration of a catalyst; average reactor residence time, reactor split and production rate. If the reactor split is used as one of the one or more process parameters, step a) of the process includes continuously polymerizing at least one alpha olefin in more than one reactor.

The computational model preferably is a kinetic model. The kinetic model preferably comprises a whole reaction network, such as the one exemplified by equations (1)-(55) below. As pointed out before, the computational model comprises one or more kinetic or thermodynamic parameters. Furthermore, calculations with the computational method are made based on the initial value for the one or more process parameters of the plurality of process parameters, *i.e.* the initial value for the one or more process parameters of the plurality of process parameters is used as an input into the computational model.

In another embodiment, the kinetic parameters are selected from the group consisting of kinetic coefficients, reaction ratios, potential reaction sites of a catalyst and the thermodynamic parameters are selected from the group consisting of heat and mass transfer coefficients. Each of the aforementioned kinetic parameters preferably consists of a value. The value may be derived from considerations based on assumed reaction mechanisms or empirical observations. Once steps b)-d) of the method have been carried out once, the value of each of the aforementioned kinetic parameters may also be a value adapted to the measurement result obtained by GPC.

In view of the above, the computational model may use initial estimates for kinetic and thermodynamic parameters or adapted kinetic and thermodynamic parameters to obtain a result for the at least one polymer property.

With the present invention also an apparatus for digital reproduction and optional control of a polymerization process is provided, comprising a data memory, which is configured to store kinetic and thermodynamic parameters; and a processor, which is configured to: compute at least one polymer property by means of a computational model using the kinetic and thermodynamic parameters from the data memory, compare the result of the computation to at least one measurement result for the at least one polymer property, determine adapted kinetic or thermodynamic parameters of the computational model and communicate said parameters to the data memory, and optionally, determining a value for one or more process parameters of a plurality of process parameters based on the comparison.

The apparatus for digital reproduction and optional control of a polymerization process may be coupled to an existing polymer production facility having at least one polymerization reactor. In this case, the existing polymer production facility is preferably supplemented by fast gel permeation chromatography (GPC) analysis equipment.

Alternatively, the present invention provides a system comprising the apparatus as described above and further comprising at least one polymer production facility including fast gel permeation chromatography (GPC) analysis equipment and at least one polymerization reactor.

Another aspect of the present invention is the use of a computational model and fast gel permeation chromatography (GPC) for digitally reproducing and optionally controlling a continuous polymerization process.

The use is characterized in that the fast GPC includes dissolving a sample from the polymerization process and passing it through two chromatography columns in series at a flow rate of 1.25 mL/min or more, preferably at a flow rate from 1.30 to 3.00 mL/min, and/or in that the computational model is a computational multi-scale polymerization process model, preferably using kinetic parameters, thermodynamic parameters and based on a value for one or more process parameters of a plurality of process parameters.

### Brief Description of the Drawings

Embodiments of the present invention are illustrated by way of example and are not limited by the figures of the accompanying drawings in which identical references represent similar elements.

### Detailed Description of the Drawings and Examples

The nature of the present invention will become more clearly apparent in view of the accompanying examples. The examples should, however, in no way limit the scope of the invention.
**Fig. 1** shows how the analysis results of four different polymer samples (Sample 1 to 4) by fast gel permeation chromatography compare to the analysis results of the same samples by conventional GPC.
**Fig. 2** shows how the analysis results of three different polymer samples (Sample 5 to 7) by fast gel permeation chromatography compare to the analysis results of the same samples by conventional GPC.
**Fig. 3** shows the development of a polymer property during a grade transitioning procedure in a polymerization reactor.

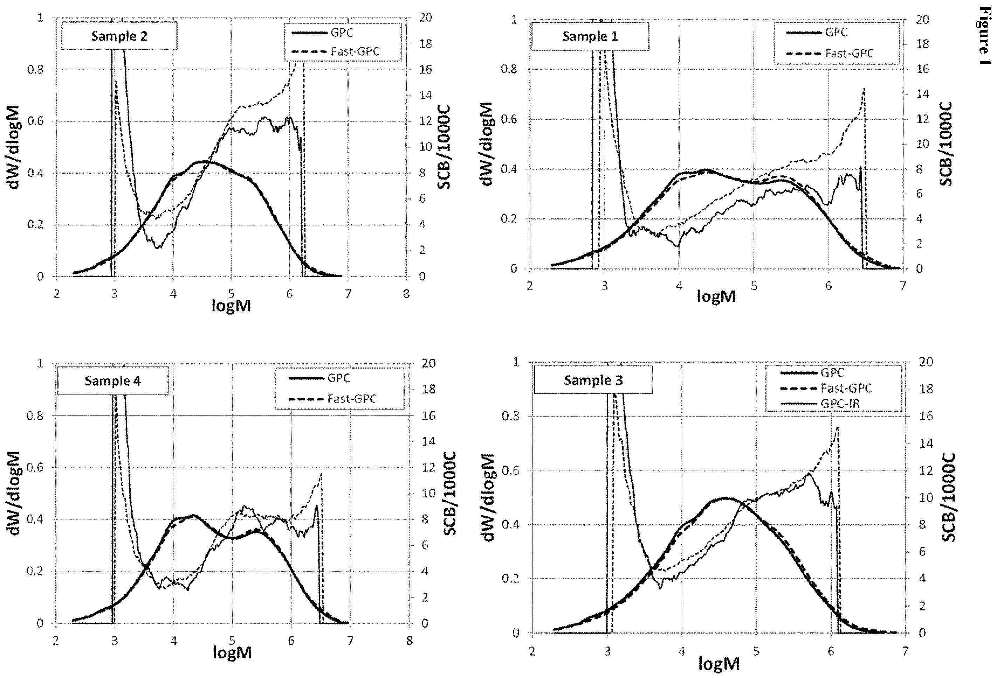

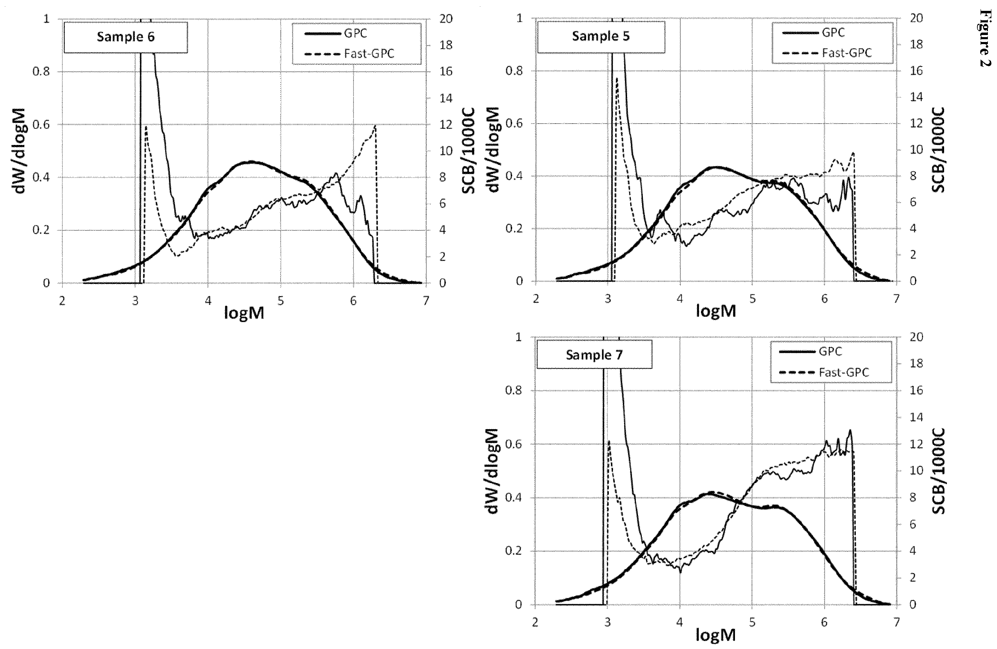

Seven different polyethylene samples have been analyzed by fast gel permeation chromatography and conventional GPC. The results are plotted in **figures 1** **and** **2****.** Two polymer properties have been measured, namely the molecular weight distribution (MWD) and the degree of short-chain branching as a function of molecular weight. The MWD is displayed as solid lines in the plots, whereas the short-chain branching as a function of molecular weight is indicated with dashed lines. It is clearly visible for all seven different polyethylene samples that there is excellent agreement of the measurement results obtained by fast GPC and conventional GPC.

However, with fast GPC the measurement time could be considerably reduced as indicated in table 1 below.

**Table 1: Measurement time.**

| | **GPC, min.** | **Fast-GPC, min.** | **Time decrease, %** |
|---|---|---|---|
| Sample 1-7 | 180 + 45 min | 55 + 15 min | 68.9 |

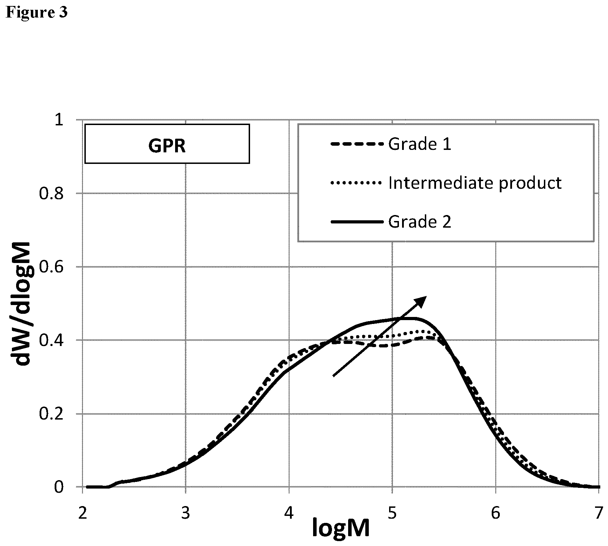

That the fast GPC method is sensitive enough to monitor polymerization processes, can also be confirmed based on the plot in **figure 3****.** During a grade transition in a polyethylene production plant, fast GPC was employed to capture the changes in a polymer property (here: MWD) while transitioning from polymer grade 1 to polymer grade 2. To that end, samples were from a gas-phase reactor every 4 hours and were measured using fast GPC. With the analysis, an intermediate product could be observed and it could be concluded that the transitioning was completed within 8 hours.

### Example for computer-implemented method for digitally reproducing a polymerization process

In an example for a computer-implemented method for digitally reproducing a polymerization process, the computational model comprises a whole reaction network for a catalyzed polymerization. The reactions of the catalyst are modelled by a discrete number of multiple site types of the catalyst, wherein the catalyst is modelled as a sum of contributions of the multiple site types. For the description of the reaction network, the following nomenclature shall be used:
${C}_{p}^{k}$ Concentration of potential sites of type k
${C}_{0}^{k}$ Concentration of activated sites of type k
${C}_{act , i}^{k}$ Concentration of reactive sites of type k, last monomer inserted to polymer chain is of type i
${C}_{D}^{k}$ Concentration of deactivated sites of type k
*A* Concentration of co-catalyst
*M*₁ Monomer 1 concentration (Ethylene)
*M*₂ Monomer 2 concentration
*M*₃ Monomer 3 concentration
*P*₁, *P*₂ , *P*₃ Polymerblock of monomer 1, monomer 2, monomer 3
*H*₂ Concentration of hydrogen

The reaction network, for example, consists of the following elementary reactions:

### Site Activation:

### By co-catalyst:

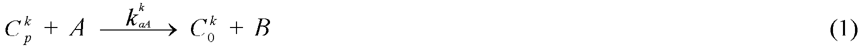

### By Monomer:

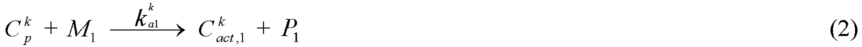

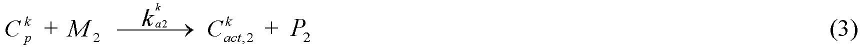

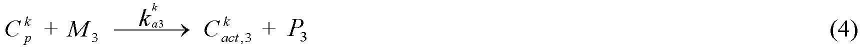

### Chain Initiation:

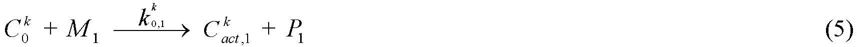

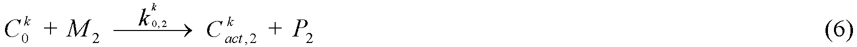

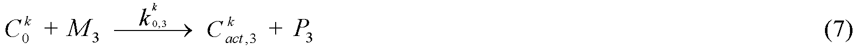

### Chain Propagation:

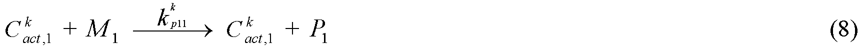

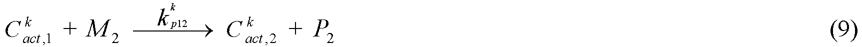

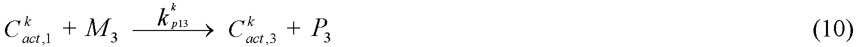

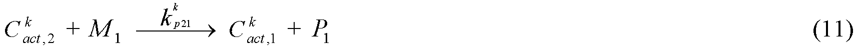

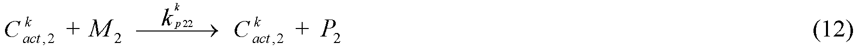

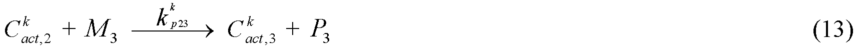

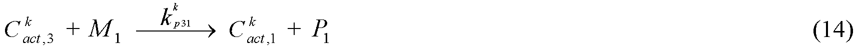

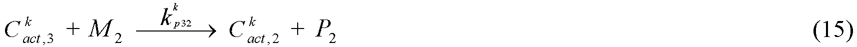

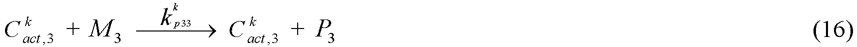

### Chain Transfer:

### By hydrogen:

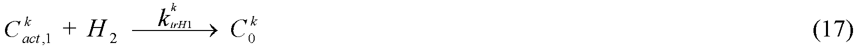

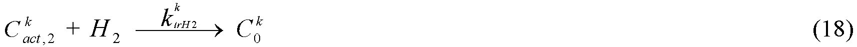

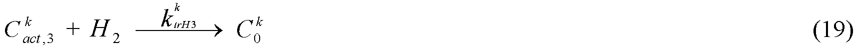

### Spontaneous:

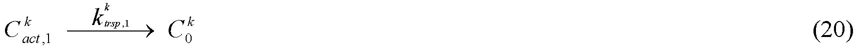

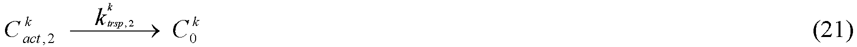

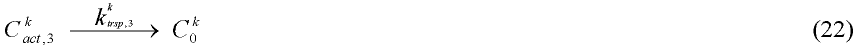

### Deactivation:

### By hydrogen:

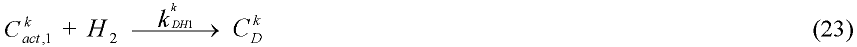

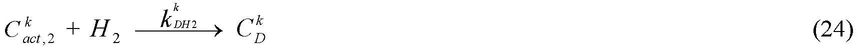

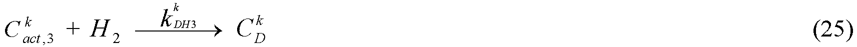

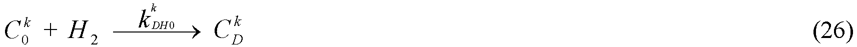

### Spontaneous:

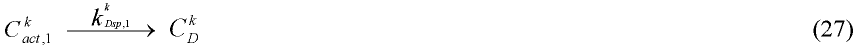

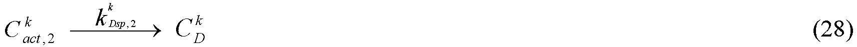

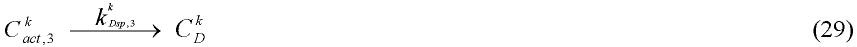

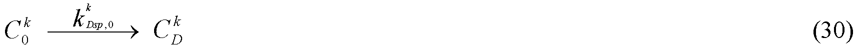

All of the above reactions are assumed to be of first order. Having calculated the rates for each of the reactions at each of the site types the following values are accessible, describing the overall conversion of reactants.

Total amount of polymer consisting of monomer 1 formed per time interval: $\begin{matrix}\frac{{dP}_{1}}{dt} = {\sum }_{k = 1}^{6} {k}_{0 , 1}^{k} ⋅ {e}^{\frac{- {Ea}_{0 , 1}^{k}}{R ⋅ T}} ⋅ {C}_{0}^{k} ⋅ {M}_{1} + {\sum }_{k = 1}^{6} {k}_{p 11}^{k} ⋅ {e}^{\frac{- {Ea}_{p 11}^{k}}{R ⋅ T}} ⋅ {C}_{act , 1}^{k} ⋅ {M}_{1} \\ + {\sum }_{k = 1}^{6} {k}_{p 21}^{k} ⋅ {e}^{\frac{- {Ea}_{p 21}^{k}}{R ⋅ T}} ⋅ {C}_{act , 2}^{k} ⋅ {M}_{1} + {\sum }_{k = 1}^{6} {k}_{p 31}^{k} ⋅ {e}^{\frac{- {Ea}_{p 31}^{k}}{R ⋅ T}} ⋅ {C}_{act , 3}^{k} ⋅ {M}_{1} \\ + {\sum }_{k = 1}^{6} {k}_{a 1}^{k} ⋅ {e}^{\frac{- {Ea}_{a 1}^{k}}{R ⋅ T}} ⋅ {C}_{P}^{k} ⋅ {M}_{1}\end{matrix}$

Total amount of polymer consisting of monomer 2 formed per time interval: $\begin{matrix}\frac{{dP}_{2}}{dt} = {\sum }_{k = 1}^{6} {k}_{0 , 2}^{k} ⋅ {e}^{\frac{- {Ea}_{0 , 2}^{k}}{R ⋅ T}} ⋅ {C}_{0}^{k} ⋅ {M}_{2} + {\sum }_{k = 1}^{6} {k}_{p 12}^{k} ⋅ {e}^{\frac{- {Ea}_{p 12}^{k}}{R ⋅ T}} ⋅ {C}_{act , 1}^{k} ⋅ {M}_{2} \\ + {\sum }_{k = 1}^{6} {k}_{p 22}^{k} ⋅ {e}^{\frac{- {Ea}_{p 22}^{k}}{R ⋅ T}} ⋅ {C}_{act , 2}^{k} ⋅ {M}_{2} + {\sum }_{k = 1}^{6} {k}_{p 32}^{k} ⋅ {e}^{\frac{- {Ea}_{p 32}^{k}}{R ⋅ T}} ⋅ {C}_{act , 3}^{k} ⋅ {M}_{2} \\ + {\sum }_{k = 1}^{6} {k}_{a 2}^{k} ⋅ {e}^{\frac{- {Ea}_{a 2}^{k}}{R ⋅ T}} ⋅ {C}_{P}^{k} ⋅ {M}_{2}\end{matrix}$

Total amount of polymer consisting of monomer 3 formed per time interval: $\begin{matrix}\frac{{dP}_{3}}{dt} = {\sum }_{k = 1}^{6} {k}_{0 , 3}^{k} ⋅ {e}^{\frac{- {Ea}_{0 , 3}^{k}}{R ⋅ T}} ⋅ {C}_{0}^{k} ⋅ {M}_{3} + {\sum }_{k = 1}^{6} {k}_{p 13}^{k} ⋅ {e}^{\frac{- {Ea}_{p 13}^{k}}{R ⋅ T}} ⋅ {C}_{act , 1}^{k} ⋅ {M}_{3} \\ + {\sum }_{k = 1}^{6} {k}_{a 3}^{k} ⋅ {e}^{\frac{- {Ea}_{a 3}^{k}}{R ⋅ T}} ⋅ {C}_{P}^{k} ⋅ {M}_{3}\end{matrix}$

The amount of cocatalyst reacted per time interval: $\frac{dA}{dt} = {\sum }_{k = 1}^{6} {k}_{aA}^{k} ⋅ {e}^{\frac{- {Ea}_{aA}^{k}}{R ⋅ T}} ⋅ {C}_{p}^{k} ⋅ A$

The amount of hydrogen reacted per time interval: $\begin{matrix}\frac{{dH}_{2}}{dt} = - {\sum }_{k = 1}^{6} {k}_{trH 1}^{k} ⋅ {e}^{\frac{- {Ea}_{trH 1}^{k}}{R ⋅ T}} ⋅ {C}_{act , 1}^{k} ⋅ {H}_{2} - {\sum }_{k = 1}^{6} {k}_{trH 2}^{k} ⋅ {e}^{\frac{- {Ea}_{trH 2}^{k}}{R ⋅ T}} ⋅ {C}_{act , 2}^{k} ⋅ {H}_{2} \\ - {\sum }_{k = 1}^{6} {k}_{trH 3}^{k} ⋅ {e}^{\frac{- {Ea}_{trH 3}^{k}}{R ⋅ T}} ⋅ {C}_{act , 3}^{k} ⋅ {H}_{2} - {\sum }_{k = 1}^{6} {k}_{DH 1}^{k} ⋅ {e}^{\frac{- {Ea}_{DH 1}^{k}}{R ⋅ T}} ⋅ {C}_{act , 1}^{k} ⋅ {H}_{2} \\ - {\sum }_{k = 1}^{6} {k}_{DH 2}^{k} ⋅ {e}^{\frac{- {Ea}_{DH 2}^{k}}{R ⋅ T}} ⋅ {C}_{act , 2}^{k} ⋅ {H}_{2} - {\sum }_{k = 1}^{6} {k}_{DH 3}^{k} ⋅ {e}^{\frac{- {Ea}_{DH 3}^{k}}{R ⋅ T}} ⋅ {C}_{act , 3}^{k} ⋅ {H}_{2} \\ - {\sum }_{k = 1}^{6} {k}_{DH 0}^{k} ⋅ {e}^{\frac{- {Ea}_{DH 0}^{k}}{R ⋅ T}} ⋅ {C}_{0}^{k} ⋅ {H}_{2}\end{matrix}$

Per site type the following expressions can be derived:

The change of potential sites of type k per time interval: $\begin{matrix}\frac{{dC}_{p}^{k}}{dt} = - {k}_{aA}^{k} ⋅ {e}^{\frac{- {Ea}_{aA}^{k}}{R ⋅ T}} ⋅ {C}_{p}^{k} ⋅ A - {k}_{a 1}^{k} ⋅ {e}^{\frac{- {Ea}_{a 1}^{k}}{R ⋅ T}} ⋅ {C}_{p}^{k} ⋅ {M}_{1} \\ - {k}_{a 2}^{k} ⋅ {e}^{\frac{- {Ea}_{a 2}^{k}}{R ⋅ T}} ⋅ {C}_{p}^{k} ⋅ {M}_{2} - {k}_{a 3}^{k} ⋅ {e}^{\frac{- {Ea}_{a 3}^{k}}{R ⋅ T}} ⋅ {C}_{p}^{k} ⋅ {M}_{3}\end{matrix}$

The change of activated sites of type k per time interval: $\begin{matrix}\frac{{dC}_{0}^{k}}{dt} = {k}_{aA}^{k} ⋅ {e}^{\frac{- {Ea}_{aA}^{k}}{R ⋅ T}} ⋅ {C}_{p}^{k} ⋅ A - {k}_{0 , 1}^{k} ⋅ {e}^{\frac{- {Ea}_{0 , 1}^{k}}{R ⋅ T}} ⋅ {C}_{0}^{k} ⋅ {M}_{1} - {k}_{0 , 2}^{k} ⋅ {e}^{\frac{- {Ea}_{0 , 2}^{k}}{R ⋅ T}} ⋅ {C}_{0}^{k} ⋅ {M}_{2} \\ - {k}_{0 , 3}^{k} ⋅ {e}^{\frac{- {Ea}_{0 , 3}^{k}}{R ⋅ T}} ⋅ {C}_{0}^{k} ⋅ {M}_{3} + {k}_{trH 1}^{k} ⋅ {e}^{\frac{- {Ea}_{trH 1}^{k}}{R ⋅ T}} ⋅ {C}_{act , 1}^{k} ⋅ {H}_{2} + {k}_{trH 2}^{k} ⋅ {e}^{\frac{- {Ea}_{trH 2}^{k}}{R ⋅ T}} ⋅ {C}_{act , 2}^{k} ⋅ {H}_{2} \\ + {k}_{trH 3}^{k} ⋅ {e}^{\frac{- {Ea}_{trH 3}^{k}}{R ⋅ T}} ⋅ {C}_{act , 3}^{k} ⋅ {H}_{2} + {k}_{trsp , 1}^{k} ⋅ {e}^{\frac{- {Ea}_{trsp , 1}^{k}}{R ⋅ T}} ⋅ {C}_{act , 1}^{k} + {k}_{trsp , 2}^{k} ⋅ {e}^{\frac{- {Ea}_{trsp , 2}^{k}}{R ⋅ T}} ⋅ {C}_{act , 2}^{k} \\ + {k}_{trsp , 3}^{k} ⋅ {e}^{\frac{- {Ea}_{trsp , 3}^{k}}{R ⋅ T}} ⋅ {C}_{act , 3}^{k} - {k}_{DH 0}^{k} ⋅ {e}^{\frac{- {Ea}_{DH 0}^{k}}{R ⋅ T}} ⋅ {C}_{0}^{k} ⋅ {H}_{2} - {k}_{Dsp , 0}^{k} ⋅ {e}^{\frac{- {Ea}_{Dsp , 0}^{k}}{R ⋅ T}} ⋅ {C}_{0}^{k}\end{matrix}$

The change of deactivated sites of type k per time interval: $\begin{matrix}\frac{{dC}_{D}^{k}}{dt} = {k}_{DH 1}^{k} ⋅ {e}^{\frac{- {Ea}_{DH 1}^{k}}{R ⋅ T}} ⋅ {C}_{act , 1}^{k} ⋅ {H}_{2} + {k}_{DH 2}^{k} ⋅ {e}^{\frac{- {Ea}_{DH 2}^{k}}{R ⋅ T}} ⋅ {C}_{act , 2}^{k} ⋅ {H}_{2} \\ + {k}_{DH 3}^{k} ⋅ {e}^{\frac{- {Ea}_{DH 3}^{k}}{R ⋅ T}} ⋅ {C}_{act , 3}^{k} ⋅ {H}_{2} + {k}_{Dsp , 1}^{k} ⋅ {e}^{\frac{- {Ea}_{Dsp , 1}^{k}}{R ⋅ T}} ⋅ {C}_{act , 1}^{k} + {k}_{Dsp , 2}^{k} ⋅ {e}^{\frac{- {Ea}_{Dsp , 2}^{k}}{R ⋅ T}} ⋅ {C}_{act , 2}^{k} \\ + {k}_{Dsp , 3}^{k} ⋅ {e}^{\frac{- {Ea}_{Dsp , 3}^{k}}{R ⋅ T}} ⋅ {C}_{act , 3}^{k} + {k}_{DH 0}^{k} ⋅ {e}^{\frac{- {Ea}_{DH 0}^{k}}{R ⋅ T}} ⋅ {C}_{0}^{k} ⋅ {H}_{2} + {k}_{Dsp , 0}^{k} ⋅ {e}^{\frac{- {Ea}_{Dsp , 0}^{k}}{R ⋅ T}} ⋅ {C}_{0}^{k}\end{matrix}$

The change of reactive sites of type k per time interval: $\begin{matrix}\frac{{dC}_{act , 1}^{k}}{dt} = {k}_{0 , 1}^{k} ⋅ {e}^{\frac{- {Ea}_{0 , 1}^{k}}{R ⋅ T}} ⋅ {C}_{0}^{k} ⋅ {M}_{1} - {k}_{p 12}^{k} ⋅ {e}^{\frac{- {Ea}_{p 12}^{k}}{R ⋅ T}} ⋅ {C}_{act , 1}^{k} ⋅ {M}_{2} \\ + {k}_{p 21}^{k} ⋅ {e}^{\frac{- {Ea}_{p 21}^{k}}{R ⋅ T}} ⋅ {C}_{act , 2}^{k} ⋅ {M}_{1} - {k}_{p 13}^{k} ⋅ {e}^{\frac{- {Ea}_{p 13}^{k}}{R ⋅ T}} ⋅ {C}_{act , 1}^{k} ⋅ {M}_{3} + {k}_{p 31}^{k} ⋅ {e}^{\frac{- {Ea}_{p 31}^{k}}{R ⋅ T}} ⋅ {C}_{act , 3}^{k} ⋅ {M}_{1} \\ - {k}_{trH 1}^{k} ⋅ {e}^{\frac{- {Ea}_{trH 1}^{k}}{R ⋅ T}} ⋅ {C}_{act , 1}^{k} ⋅ {H}_{2} - {k}_{trsp , 1}^{k} ⋅ {e}^{\frac{- {Ea}_{trsp , 1}^{k}}{R ⋅ T}} ⋅ {C}_{act , 1}^{k} - {k}_{DH 1}^{k} ⋅ {e}^{\frac{- {Ea}_{DH 1}^{k}}{R ⋅ T}} ⋅ {C}_{act , 1}^{k} ⋅ {H}_{2} \\ - {k}_{Dsp , 1}^{k} ⋅ {e}^{\frac{- {Ea}_{Dsp , 1}^{k}}{R ⋅ T}} ⋅ {C}_{act , 1}^{k} + {k}_{a 1}^{k} ⋅ {e}^{\frac{- {Ea}_{a 1}^{k}}{R ⋅ T}} ⋅ {C}_{P}^{k} ⋅ {M}_{1}\end{matrix}$

The change of reactive sites of type k (last inserted monomer = monomer 2) per time interval: $\begin{matrix}\frac{{dC}_{act , 2}^{k}}{dt} = {k}_{0 , 2}^{k} ⋅ {e}^{\frac{- {Ea}_{0 , 2}^{k}}{R ⋅ T}} ⋅ {C}_{0}^{k} ⋅ {M}_{2} + {k}_{p 12}^{k} ⋅ {e}^{\frac{- {Ea}_{p 12}^{k}}{R ⋅ T}} ⋅ {C}_{act , 1}^{k} ⋅ {M}_{2} \\ - {k}_{p 21}^{k} ⋅ {e}^{\frac{- {Ea}_{p 21}^{k}}{R ⋅ T}} ⋅ {C}_{act , 2}^{k} ⋅ {M}_{1} - {k}_{p 23}^{k} ⋅ {e}^{\frac{- {Ea}_{p 23}^{k}}{R ⋅ T}} ⋅ {C}_{act , 2}^{k} ⋅ {M}_{3} + {k}_{p 32}^{k} ⋅ {e}^{\frac{- {Ea}_{p 32}^{k}}{R ⋅ T}} ⋅ {C}_{act , 3}^{k} ⋅ {M}_{2} \\ - {k}_{trH 2}^{k} ⋅ {e}^{\frac{- {Ea}_{trH 2}^{k}}{R ⋅ T}} ⋅ {C}_{act , 2}^{k} ⋅ {H}_{2} - {k}_{trsp , 2}^{k} ⋅ {e}^{\frac{- {Ea}_{trsp , 2}^{k}}{R ⋅ T}} ⋅ {C}_{act , 2}^{k} - {k}_{DH 2}^{k} ⋅ {e}^{\frac{- {Ea}_{DH 2}^{k}}{R ⋅ T}} ⋅ {C}_{act , 2}^{k} ⋅ {H}_{2} \\ - {k}_{Dsp , 2}^{k} ⋅ {e}^{\frac{- {Ea}_{Dsp , 2}^{k}}{R ⋅ T}} ⋅ {C}_{act , 2}^{k} + {k}_{a 2}^{k} ⋅ {e}^{\frac{- {Ea}_{a 2}^{k}}{R ⋅ T}} ⋅ {C}_{P}^{k} ⋅ {M}_{2}\end{matrix}$

The change of reactive sites of type k (last inserted monomer = monomer 3) per time interval: $\begin{matrix}\frac{{dC}_{act , 3}^{k}}{dt} = {k}_{0 , 3}^{k} ⋅ {e}^{\frac{- {Ea}_{0 , 3}^{k}}{R ⋅ T}} ⋅ {C}_{0}^{k} ⋅ {M}_{3} + {k}_{p 13}^{k} ⋅ {e}^{\frac{- {Ea}_{p 13}^{k}}{R ⋅ T}} ⋅ {C}_{act , 1}^{k} ⋅ {M}_{3} \\ - {k}_{p 31}^{k} ⋅ {e}^{\frac{- {Ea}_{p 31}^{k}}{R ⋅ T}} ⋅ {C}_{act , 3}^{k} ⋅ {M}_{1} - {k}_{p 32}^{k} ⋅ {e}^{\frac{- {Ea}_{p 32}^{k}}{R ⋅ T}} ⋅ {C}_{act , 3}^{k} ⋅ {M}_{2} + {k}_{p 23}^{k} ⋅ {e}^{\frac{- {Ea}_{p 23}^{k}}{R ⋅ T}} ⋅ {C}_{act , 2}^{k} ⋅ {M}_{3} \\ - {k}_{trH 3}^{k} ⋅ {e}^{\frac{- {Ea}_{trH 3}^{k}}{R ⋅ T}} ⋅ {C}_{act , 3}^{k} ⋅ {H}_{2} - {k}_{trsp , 3}^{k} ⋅ {e}^{\frac{- {Ea}_{trsp , 3}^{k}}{R ⋅ T}} ⋅ {C}_{act , 3}^{k} - {k}_{DH 3}^{k} ⋅ {e}^{\frac{- {Ea}_{DH 3}^{k}}{R ⋅ T}} ⋅ {C}_{act , 3}^{k} ⋅ {H}_{2} \\ - {k}_{Dsp , 3}^{k} ⋅ {e}^{\frac{- {Ea}_{Dsp , 3}^{k}}{R ⋅ T}} ⋅ {C}_{act , 3}^{k} + {k}_{a 3}^{k} ⋅ {e}^{\frac{- {Ea}_{a 3}^{k}}{R ⋅ T}} ⋅ {C}_{P}^{k} ⋅ {M}_{3}\end{matrix}$

The amount of polymer consisting of monomer 1 formed at site type k per time interval: $\begin{matrix}\frac{{dP}_{1 , k}}{dt} = {k}_{0 , 1}^{k} ⋅ {e}^{\frac{- {Ea}_{0 , 1}^{k}}{R ⋅ T}} ⋅ {C}_{0}^{k} ⋅ {M}_{1} + {k}_{p 11}^{k} ⋅ {e}^{\frac{- {Ea}_{p 11}^{k}}{R ⋅ T}} ⋅ {C}_{act , 1}^{k} ⋅ {M}_{1} \\ + {k}_{p 21}^{k} ⋅ {e}^{\frac{- {Ea}_{p 21}^{k}}{R ⋅ T}} ⋅ {C}_{act , 2}^{k} ⋅ {M}_{1} + {k}_{p 31}^{k} ⋅ {e}^{\frac{- {Ea}_{p 31}^{k}}{R ⋅ T}} ⋅ {C}_{act , 3}^{k} ⋅ {M}_{1} + {k}_{a 1}^{k} ⋅ {e}^{\frac{- {Ea}_{a 1}^{k}}{R ⋅ T}} ⋅ {C}_{P}^{k} ⋅ {M}_{1}\end{matrix}$

The amount of polymer consisting of monomer 2 formed at site type k per time interval: $\begin{matrix}\frac{{dP}_{2 , k}}{dt} = {k}_{0 , 2}^{k} ⋅ {e}^{\frac{- {Ea}_{0 , 2}^{k}}{R ⋅ T}} ⋅ {C}_{0}^{k} ⋅ {M}_{2} + {k}_{p 12}^{k} ⋅ {e}^{\frac{- {Ea}_{p 12}^{k}}{R ⋅ T}} ⋅ {C}_{act , 1}^{k} ⋅ {M}_{2} \\ + {k}_{p 22}^{k} ⋅ {e}^{\frac{- {Ea}_{p 22}^{k}}{R ⋅ T}} ⋅ {C}_{act , 2}^{k} ⋅ {M}_{2} + {k}_{p 32}^{k} ⋅ {e}^{\frac{- {Ea}_{p 32}^{k}}{R ⋅ T}} ⋅ {C}_{act , 3}^{k} ⋅ {M}_{2} + {k}_{a 2}^{k} ⋅ {e}^{\frac{- {Ea}_{a 2}^{k}}{R ⋅ T}} ⋅ {C}_{P}^{k} ⋅ {M}_{2}\end{matrix}$

The amount of polymer consisting of monomer 3 formed at site type k per time interval: $\frac{{dP}_{3 , k}}{dt} = {k}_{0 , 3}^{k} ⋅ {e}^{\frac{- {Ea}_{0 , 3}^{k}}{R ⋅ T}} ⋅ {C}_{0}^{k} ⋅ {M}_{3} + {k}_{p 13}^{k} ⋅ {e}^{\frac{- {Ea}_{p 13}^{k}}{R ⋅ T}} ⋅ {C}_{act , 1}^{k} ⋅ {M}_{3}$

The sum of propagation rates at site type k: ${R}_{Pr op , k} = \frac{{dP}_{1 , k}}{dt} + \frac{{dP}_{2 , k}}{dt} + \frac{{dP}_{3 , k}}{dt}$

The sum of chain transfer (and deactivation) rates at site type k: $\begin{matrix}{R}_{Trans , k} = {k}_{trH 1}^{k} ⋅ {e}^{\frac{- {Ea}_{trH 1}^{k}}{R ⋅ T}} ⋅ {C}_{act , 1}^{k} ⋅ {H}_{2} + {k}_{trH 2}^{k} ⋅ {e}^{\frac{- {Ea}_{trH 2}^{k}}{R ⋅ T}} ⋅ {C}_{act , 2}^{k} ⋅ {H}_{2} \\ + {k}_{trH 3}^{k} ⋅ {e}^{\frac{- {Ea}_{trH 3}^{k}}{R ⋅ T}} ⋅ {C}_{act , 3}^{k} ⋅ {H}_{2} + {k}_{trsp , 1}^{k} ⋅ {e}^{\frac{- {Ea}_{trsp , 1}^{k}}{R ⋅ T}} ⋅ {C}_{act , 1}^{k} + {k}_{trsp , 2}^{k} ⋅ {e}^{\frac{- {Ea}_{trsp , 2}^{a}}{R ⋅ T}} ⋅ {C}_{act , 2}^{k} \\ + {k}_{trsp , 3}^{k} ⋅ {e}^{\frac{- {Ea}_{trsp , 3}^{k}}{R ⋅ T}} ⋅ {C}_{act , 3}^{k} + {k}_{DH 1}^{k} ⋅ {e}^{\frac{- {Ea}_{DH 1}^{k}}{R ⋅ T}} ⋅ {C}_{act , 1}^{k} ⋅ {H}_{2} + {k}_{DH 2}^{k} ⋅ {e}^{\frac{- {Ea}_{DH 2}^{k}}{R ⋅ T}} ⋅ {C}_{act , 2}^{k} ⋅ {H}_{2} \\ + {k}_{DH 3}^{k} ⋅ {e}^{\frac{- {Ea}_{DH 3}^{k}}{R ⋅ T}} ⋅ {C}_{act , 3}^{k} ⋅ {H}_{2} + {k}_{Dsp , 1}^{k} ⋅ {e}^{\frac{- {Ea}_{Dsp , 1}^{k}}{R ⋅ T}} ⋅ {C}_{act , 1}^{k} + {k}_{Dsp , 2}^{k} ⋅ {e}^{\frac{- {Ea}_{Dsp , 2}^{k}}{R ⋅ T}} ⋅ {C}_{act , 2}^{k} \\ + {k}_{Dsp , 3}^{k} ⋅ {e}^{\frac{- {Ea}_{Dsp , 3}^{k}}{R ⋅ T}} ⋅ {C}_{act , 3}^{k}\end{matrix}$

The instantaneous comonomer content of monomer 2 at site type k: ${CC}_{2 , k} = \frac{\frac{{P}_{2 , k}}{dt}}{\left(\frac{{P}_{1 , k}}{dt}+\frac{{P}_{2 , k}}{dt}+\frac{{P}_{3 , k}}{dt}\right)}$

The instantaneous comonomer content of monomer 3 at site type k: ${CC}_{3 , k} = \frac{\frac{{P}_{3 , k}}{dt}}{\left(\frac{{P}_{1 , k}}{dt}+\frac{{P}_{2 , k}}{dt}+\frac{{P}_{3 , k}}{dt}\right)}$

Having calculated the instantaneous comonomer contents at site type k, the instantaneous average molecular weight of the polymer formed at site type k can be calculated: ${AMW}_{K} = {M}_{1} ⋅ \left(1-{CC}_{2 , k}-{CC}_{3 , k}\right) + {M}_{2} ⋅ {CC}_{2 , k} + {M}_{3} ⋅ {CC}_{3 , k}$

With M₁, M₂ and M₃ being the molecular weights of monomer 1, monomer 2 and monomer 3.

From the instantaneous average molecular weight the instantaneous number average molecular weight (*M_{n,k}*) can be derived, using *R*_{Pr*op,k*} and *R_{Trans,k}*. ${M}_{n , k} = {AMW}_{k} ⋅ \frac{{R}_{Pr op , k}}{{R}_{Trans , k}}$

Taking into account that the polydispersity index for the single site types is 2 the instantaneous weight average molecular weight for site type k (*M*_{*w*,*k*}) is: ${M}_{w , k} = 2 ⋅ {M}_{n , k}$

The instantaneous molecular weight distribution for site type k is given by the following Schulz-Flory distribution: ${MWD}_{k} \left(i\right) = \frac{{R}_{Pr op , k} ⋅ {AMW}_{k}}{\frac{{dP}_{1}}{dt} + \frac{{dP}_{2}}{dt} + \frac{{dP}_{3}}{dt}} ⋅ 2.3026 ⋅ {i}^{2} ⋅ {\left(\frac{{R}_{Trans , k}}{{R}_{Pr op , k}}\right)}^{2} ⋅ {10}^{\frac{- i ⋅ {R}_{Trans , k}}{{R}_{Pr op , k}}}$

Where i is the chain length of polymer (the X-axis in the distribution).

The total instantaneous MWD of the polymer formed over all site types of the catalyst is the sum of the instantaneous MWDs of the different site types: $MWD \left(i\right) = {\sum }_{k = 1}^{6} {MWD}_{k} \left(i\right)$

The instantaneous comonomer content distribution for monomer 2 over all site types k is given by: $CCD 2 \left(i\right) = {\sum }_{k = 1}^{6} \frac{{MWD}_{k} \left(i\right) ⋅ {CC}_{2 , k}}{MWD \left(i\right)}$

And analogously the comonomer content distribution for monomer 3 over all site types k is given by: $CCD 3 \left(i\right) = {\sum }_{k = 1}^{6} \frac{{MWD}_{k} \left(i\right) ⋅ {CC}_{3 , k}}{MWD \left(i\right)}$

The result for the MWD according to equation (53), *i.e.* the result for the polymer property obtained by a computational model, is then compared to the measurement result for the MWD that is obtained by analyzing a sample extracted from the polymerization process by fast GPC. If there is a deviation, the computational model can be adapted by adapting the one or more kinetic or thermodynamic parameters, i.e. the parameter values. Furthermore, it is possible to control the polymerization process by determining a new value one or more process parameters based on the comparison between the computed MWD and the measurement result for the MWD in view of the target MWD (setpoint).

Alternatively, the results for the comonomer content distributions for monomer 2 and monomer 3, CCD2 and CCD3 according to equations (54) and (55), could be converted into a degree of short-chain branching as a function of molecular weight and could be compared to the measurement result for the degree of SCBs as a function of molecular weight, that is obtained by analyzing a sample extracted from the polymerization process by fast GPC with an IR detector having different optical band filters. If, upon such a comparison, it turns out that there is a deviation, the computational model can be adapted by adapting the one or more kinetic or thermodynamic parameters, i.e. the parameter values. Furthermore, it is possible to control the polymerization process by determining a new value one or more process parameters based on the comparison between the computed SCB as a function of molecular weight and the measurement result for the SCB as a function of molecular weight in view of the target SCB as a function of molecular weight (setpoint).

## Claims

1. A method for monitoring a polymerization process comprising the following steps:
a) continuously polymerizing at least one alpha olefin in one or more reactors;
b) extracting a sample after polymerizing in at least one of the one or more reactors;
c) analyzing the sample by fast gel permeation chromatography (GPC) to obtain a measurement result for at least one polymer property,
wherein the sample is dissolved and passed through two chromatography columns in series at a flow rate of 1.25 mL/min or more; and
d) comparing the measurement result for at least one polymer property to at least one predetermined target value or to a previously obtained measurement result for the at least one polymer property.

2. A computer-implemented method for digitally reproducing and optionally controlling a polymerization process comprising the following steps:
a) continuously polymerizing at least one alpha olefin in one or more reactors, wherein each reactor of the one or more reactors operates at an initial value for one or more process parameters of a plurality of process parameters;
b) extracting a sample after polymerizing in at least one of the one or more reactors;
c) analyzing the sample by fast gel permeation chromatography (GPC) to obtain a measurement result for at least one polymer property;
d) comparing the measurement result for the at least one polymer property to a result for the at least one polymer property obtained by a computational model based on the initial value for the one or more process parameters of the plurality of process parameters; and,
e) if the comparison results in a deviation, adapting one or more kinetic or thermodynamic parameters of the computational model, and
f) optionally determining a subsequent value for the one or more process parameters of the plurality of process parameters based on the adapted computational model and adopting the subsequent value as the initial value in step a).

3. The method according to claim 1 or claim 2, wherein analyzing the sample by fast GPC comprises dissolving the sample and passing the dissolved sample through two chromatography columns in series at a flow rate of from 1.30 to 3.00 mL/min, preferably at a flow rate of from 1.35 to 2.00 mL/min, in particular at a flow rate of from 1.40 to 1.80 mL/min.

4. The method according to any one of the preceding claims, wherein
the fast GPC is a fast high temperature gel permeation chromatography (HT-GPC), and/or
the sample is dissolved at a temperature in a range from 150 to 190 °C, preferably from 160 °C or more to 180 °C, and wherein further preferably the sample is dissolved in a chlorinated solvent, such as trichlorobenzene or dichlorobenzene, more preferably under inert conditions, such as under nitrogen atmosphere.

5. The method according to any one of the preceding claims, wherein the at least one alpha olefin is selected from the group consisting of C₂-C₈ alpha olefins and mixtures thereof, preferably from the group consisting of C₂-C₄ alpha olefins and mixtures thereof, more preferably from the group consisting of ethylene and propylene and mixtures thereof.

6. The method according to any one of the preceding claims, wherein the one or more reactors are selected from the group consisting of a pre-polymerization loop reactor, a polymerization loop reactor, a gas-phase reactor and combinations thereof.

7. The method according to any one of claims 2 to 6, wherein steps b)-e) and, optionally, step f) are repeated in intervals from 3 to 10 hours, preferably in intervals from 4 to 6 hours.

8. The method according to any one of the preceding claims, wherein the at least one polymer property is selected from the group consisting of molecular weight, molecular weight distribution (MWD), polydispersity (PD), number average molecular weight (Mn), weight average molecular weight (Mw), z-average molecular weight (Mz), and degree of short-chain branching (SCB), preferably degree of short-chain branching as a function of molecular weight.

9. The method according to any one of claims 2 to 8, wherein the one or more process parameters are selected from concentration of a monomer and/or co-monomer; hydrogen ratio; temperature; pressure; concentration of a catalyst; average reactor residence time, reactor split and production rate.

10. The method according to any one of claims 2 to 9, wherein the kinetic parameters are selected from the group consisting of kinetic coefficients, reaction ratios, potential reaction sites of a catalyst and the thermodynamic parameters are selected from the group consisting of heat and mass transfer coefficients.

11. The method according to any one of claims 2 to 10, wherein the computational model uses initial estimates for kinetic and thermodynamic parameters or adapted kinetic and thermodynamic parameters to obtain a result for the at least one polymer property.

12. An apparatus for digital reproduction and optional control of a polymerization process comprising
a data memory, which is configured to store kinetic and thermodynamic parameters; and
a processor, which is configured to
- compute at least one polymer property by means of a computational model using the kinetic and thermodynamic parameters from the data memory,
- compare the result of the computation to at least one measurement result for the at least one polymer property,
- determine adapted kinetic or thermodynamic parameters of the computational model and communicate said parameters to the data memory, and
- optionally, determining a value for one or more process parameters of a plurality of process parameters based on the comparison.

13. A system comprising the apparatus according to claim 12 and further comprising at least one polymer production facility including fast gel permeation chromatography (GPC) analysis equipment and at least one polymerization reactor.

14. Use of a computational model and fast gel permeation chromatography (GPC) for digitally reproducing and optionally controlling a continuous polymerization process.

15. The use according to claim 14,
wherein the fast GPC includes dissolving a sample from the polymerization process and passing it through two chromatography columns in series at a flow rate of 1.25 mL/min or more, preferably at a flow rate from 1.30 to 3.00 mL/min, and/or
wherein the computational model is a computational multi-scale polymerization process model, preferably using kinetic parameters, thermodynamic parameters and based on a value for one or more process parameters of a plurality of process parameters.
